# EUROPEAN PATENT SPECIFICATION

(11) **EP 3 581 033 B1**
(45) Date of publication and mention of the grant of the patent: **19.11.2025**
(21) Application number: 19174098.4
(22) Date of filing: 13.05.2019
(51) Int. Cl.: A23G 1/00, A23G 1/32, A23G 1/40

(54) **CHOCOLATE CONTAINING MOLASSES POWDERAND METHOD FOR PRODUCTION OF THEM**
SCHOKOLADE MIT MELASSEPULVER UND VERFAHREN ZUR HERSTELLUNG DAVON
CHOCOLAT CONTENANT DE LA POUDRE DE MÉLASSE ET LEUR PROCÉDÉ DE PRODUCTION

(30) Priority: 11.06.2018 TR 201808304
(43) Date of publication of application: 18.12.2019
(73) Proprietor: Eti Gida Sanayi Ve Ticaret Anonim Sirketi, Eskisehir (TR)
(72) Inventor: KANATLI, Ahmet Firuzhan, ESK EH R (TR)
(74) Representative: Kaya, Erdem

(56) References cited:
- EP-A1- 2 567 622
- KR-A- 20170 092 956
- TR-A2- 201 720 995
- US-A1- 2006 008 576
- US-B1- 6 221 422
- DATABASE GNPD [online] MINTEL; 14 June 2017 (2017-06-14), ANONYMOUS: "Molasses and Cocoa in Envelopes", XP055574850, retrieved from www.gnpd.com Database accession no. 4884323

## Description

### Technical Field

Invention relates to chocolate containing molasses powder and method for production of them.

Invention particularly relates to chocolate comprising molasses powder obtained by means of mixing and then drying, milk and/or milk powder and/or whey and/or whey powder and/or cacao powder, which are partially or completely main ingredients of chocolate and similar products of molasses in sticky liquid form and similar products as sweetener component instead of refined sugar for supply to food sector, and a method for production of such products.

### State Of The Art

Chocolate, cacao products and sugar and/or sweetener means product prepared by adding cacao products and sugar and/or sweetener and other food compounds except animal fat other than milk fat with milk and/or milk products and additives and/or aroma agents permitted under Turkish Food Codex Regulation. They are classified as bitter chocolate, milk chocolate, white chocolate, filled chocolate, praline based on compounds and rate thereof in the ingredients.

Basically chocolate production comprising steps of mixing main ingredients (premix), grinding, conching (blundering-homogenizing) and crystallization (tempering). Main compounds of powder and liquid in the recipe are mixed homogeneously. The obtained fluid mixture undergoes pre-refining and post refining stages and reaches conching stage. Conching comprising of two phases, dry and wet. During wet conching remaining part of butter not added in whole during premix stage is added. During final phase of conching emulgators (lecithin and PGPR) are added and fluid level and flowing stage of liquid chocolate is adjusted. Liquid chocolate undergoes crystallisation (tempering) process and poured into moulds, cooled and brought into end product.

Various ingredients are used in solid or liquid form in chocolate and similar products subject to humidity content of end product and processibility conditions. Humidity contents of the compounds used therein are considerably important for final product quality, shelf life and rheological features. Components of high humidity content may adversely affect both mixture and rheological and taste features of end product. For that reason, use of food compounds of water and high humidity rate in chocolate and chocolate products is avoided. The causes of such case are:
- In end chocolate product, decreasing existence of water to melting temperature of chocolate and reduction of thermal resistance, degradation of melting characteristic of chocolate in mouth, that is, crystal structure and rheological features,
- Humidity quantity of chocolate in melted phase is typically at 0,5-1,5 %. Chocolate; when containing water, sucrose dissolves and causes re-crystallization on the surface in finished product, it develops the default called sugar bloom in chocolate and changes physical and taste features of chocolate (colour, hardness etc.) negatively.

The humidity of 1,5 % and above from compounds during chocolate production process causes development of syrup layer on sugar particulates during processing and increase in friction between them and degrades melted chocolate structure and as a result thereof, caking occurs and excessive increase in viscosity occurs.

Humidity of raw ingredients used in chocolate production varies in range of 0,5-3%. During conching although some decrease in humidity value caused by raw ingredients occurs, input of high humidity raw agents affects conching, stocking, moulding and coating processes negatively and causes unnecessary lengthening conching period and heating.

Because of these reasons, inputs such as molasses containing high rate of humidity are not used in production of chocolate and similar products technically. In the related art, sweeteners in liquid phase are added into inputs not contained in real chocolate ingredients such as maltodextrine, starch, gum, gelatin, silicone, dioxide etc and dried and used in chocolate. However, agents such as maltodextrin, gum used as drying agent causes caking and use of additional inputs not required to be in chocolate. Additional inputs which are not chocolate compounds also negatively affect taste, smell, colour and flavour of chocolate. In addition, use of such types of inputs does not conform to Chocolate Communiqué.

When the existing literature was examined, the following patent applications were seen.

The national application numbered TR2016/16007 and titled "a method for production of cream molasses in spreadable form" discloses a method for production of a cream molasses in spreadable form applied by crystallized molasses and liquid molasses after undergoing certain phases developed as a result of mixing already crystallized molasses with liquid molasses in taste and smell of liquid molasses easily mixing with various foods such as foods such as tahina with thickening lower than solid molasses made from various fruit, also used in biscuit, chocolate and similar products. Said patent discloses obtaining a cream molasses that can also be used as component of chocolate. However, as mentioned before, when molasses disclosed under said patent is used together with water content of chocolate, physical and flavour features of chocolate will be damaged.

Korean patent application numbered KR20160004871 (A) entitled "Fruit Chocolate" relates to a chocolate consisting of fruits such as pear, pine apple, peach, orange, coconut, lemon, quince, apple, grapefruit, melon, grape, banana, Japanese apricot, banana, kiwi, oriental melon, watermelon, apricot, citrus, guava, tropical fruit, plum, cherry and dates or fruit powder or juice made from such fruits. Fruit powders used in said chocolate are used to give taste and aroma. In addition when juice containing water is used, total water content in chocolate increases and rheological and taste features of chocolate are adversely affected.

The search made in the related art indicated no chocolate and similar products comprising of partially or fully molasses powder as sweetening agent instead of sugar or any method for production of such products.

As a result, due to above described disadvantages and inadequacy of existing solutions, it has been necessary to make development in the related art.

### Purpose of the Invention

The present invention relates to a chocolate comprising of molasses powder and similar products and a method for producing such products meeting the needs mentioned above, eliminating all disadvantages and providing some additional advantages.

Main purpose of the invention is to provide chocolate without refine sugar and comprising molasses powder as sweetening agent, obtained by mixture and drying of molasses in liquid phase with milk and/or milk powder and/or whey and/or whey powder and/or cacao powder to offer in food sector and a method for production of such products.

Another purpose of the invention is to develop chocolate with new aroma and flavour profiles by using molasses types produced conventionally and having distinctive aroma as sweetening agent in chocolate and similar products.

A further purpose of the invention is to provide prevention of negative change in both physical and taste features of chocolate by water content thanks to chocolate containing molasses powder mixed and dried with main ingredients of chocolate such as milk and/or milk powder and/or whey and/or whey powder and/or cacao powder.

Another purpose of the invention is to provide development in new generation milk, white and bitter chocolate products sweetened partially or completely by molasses powder.

A further purpose of the invention is to provide no starch taste in end product as it does not contain molasses powder maltodextrine.

Another purpose of the invention is to produce new generation chocolate products with more developed nutrient components thanks to molasses powder used therein having sweetener feature as well as a lot of nutrient features such as vitamin, mineral etc.

Invention is sweet food product to be offered to food sector to achieve the above described purposes and consists of chocolate containing molasses powder made from molasses and milk and/or milk powder and/or whey and/or whey powder and/or cacao powder, partially or completely as sweetener, and made from cacao butter and/or cacao liqueur and/or cacao powder and/or milk powder and/or emulgator

The present invention is defined by the claims.

The present invention discloses a milk chocolate comprising:
- 5-60 % by weight of molasses powder obtained by drying a mixture comprising molasses and or more of milk, milk powder, whey, whey powder or cacao powder,
- 5-25 % by weight of cacao liquor,
- 15-40 % by weight of cacao butter,
- 0,1-2 % by weight of emulgator,
- wherein the molasses powder is used as a sweetening agent partially or completely instead of refined sugar.

The present invention also discloses a white chocolate comprising:
- 5-70% by weight of molasses powder obtained by drying a mixture comprising molasses and one or more of milk, milk powder, whey or whey powder,
- 15-40% by weight of cacao butter,
- 0,1-2% by weight of emulgator,
- wherein the molasses powder is used as a sweetening agent partially or completely instead of refined sugar.

The present invention also discloses a bitter chocolate comprising:
- 5-80% by weight of molassses powder obtained by drying a mixture comprising molasses and cacao powder,
- 10-50% by weight of cacao liquor,
- 5-30% by weight of cacao butter,
- 0,1-2% by weight of emulgator,
- wherein the molasses powder is used as a sweetening agent partially or completely instead of refined sugar.

The present invention also discloses a method for production of a sweet food product according to any one of claims 1 to 8, characterized in comprising steps of:
a) mixing molasses powder with one or more of cacao butter, cacao liquor, cacao powder, milk powder and emulgator until a homogeneous mixture is obtained,
b) refining the mixture in a double-cylinder and then a five-cylinder roller until a particle size 10-50 micrometer, preferably 15-40 micrometer is achieved,
c) subjecting the refined mixture to a conching process,
d) tempering the chocolate mixture to avoid formation of unstable crystals of cacao butter,
e) filling or coating with tempered chocolate,
f) cooling the product.

### Detailed Description of the Invention

In this detailed description, chocolate containing molasses powder and production method being subject of this invention and the preferred compounds and parameters have been disclosed solely for the purpose of better understanding of the subject and described in a manner not causing any restrictive effect.

In an illustrative embodiment of the invention, chocolate sweetened with molasses powder is used as cocoline, praline and similar product production. Chocolate disclosed under the invention in cocoline, praline and similar product comprising partial or complete use of molasses powder disclosed under patent owned by 'ETI GIDA SANAYI VE TICARET ANONIM SIRKETI' with application number, TR2017/20995 as a substitute for refined sugar for sweetening in production of chocolate, cocoline, praline and similar product.

Method for production of chocolate without refined sugar sweetened with molasses powder disclosed under patent with application number TR2017/20995 comprising process steps of
- Mixture of cacao butter and/or cacao liqueur and/or cacao powder and/or milk powder and/or emulgator and molasses powder as raw materials until obtaining homogeneity,
- Applying refining operation to homogenous mixture until achievement of 10-50 micrometer, preferably 15-40 micrometer size particles in double cylinder firstly and then five-cylinder,
- Subjecting chocolate mixture in powder form to conching process after refining,
- Subjecting it to tempering process in order to prevent formation of instable crystals causing undesired fat bloom of polymeric cacao butter in chocolate,
- Filling tempered chocolate/covering in forms;
- Cooling chocolate filled in/covered in forms.

In an illustrative embodiment of invention, chocolate sweetened with molasses powder can be produced as milk chocolate consisting of molasses powder, white chocolate consisting of molasses powder and bitter chocolate consisting of molasses powder based on components and their rates under prescription.

The following table 1 shows raw materials used in milk chocolate recipe comprising molasses powder and rates of use.

**Table 1: Recipe for milk chocolate consisting of molasses powder**

| **Raw material** | **Amount usable in Standard Chocolate by weight (%)** | **Amount usable in Chocolate containing molasses Powder by weight (%)** |
|---|---|---|
| **Molasses Powder** (preferably 50 % molasses dry matter and 50 % milk and/or milk powder and/or whey and/or whey powder and/or cacao powder dry matter) | 0 | 5 - 60 |
| **Cacao Liqueur** | 5-25 | 5 - 25 |
| **Cacao Fat** | 15-40 | 15 - 40 |
| **Emulgator** | 0,1-2 | 0,1-2 |

Molasses powder used in production of milk chocolate containing molasses powder of which recipe is given in table 1 is molasses powder obtained by mixing and drying molasses of liquid form with milk and/or milk powder and/or whey and/or whey powder and/or cacao powder, and a molasses powder consisting of preferably 50 % molasses dry matter and 50 % milk and/or milk powder and/or whey and/whey powder and/or cacao powder dry matter.

In an illustrative embodiment of the invention, milk chocolate containing molasses powder may contain cacao powder in 35 % rate by weight in addition to recipe given in Table 1.

In an illustrative embodiment of the invention, milk chocolate containing molasses powder may contain milk powder in 35 % rate by weight in addition to recipe given in Table 1.

Milk chocolate containing molasses powder obtained according to recipe given in Table 1 can be classified as chocolate not containing 'refined sugar (sucrose)' or "sugar free" chocolate. When alternative products are needed, refined sugar (sucrose) of maximum 50 % by weight can be added to the above recipe.

The following table 2 shows raw materials used in white chocolate recipe consisting of molasses powder and rates of use.

**Table 2: Recipe for milky chocolate consisting of molasses powder**

| **Raw material** | **Amount usable in Standard Chocolate by weight (%)** | **Amount usable in Chocolate containing molasses Powder by weight (%)** |
|---|---|---|
| **Molasses Powder** (preferably 50 % molasses dry matter and 50 % milk and/or milk powder and/or whey and/or whey powder dry matter) | 0 | 5-70 |
| **Cacao Fat** | 15-40 | 15 - 40 |
| **Emulgator** | 0,1-2 | 0,1-2 |

Molasses powder used in production of white chocolate containing molasses powder of which recipe is given in table 2 is molasses powder obtained by mixing and drying molasses of liquid form with milk and/or milk powder and/or whey and/or whey powder and/or cacao powder, and a molasses powder consisting of preferably 50 % molasses dry matter and 50 % milk and/or milk powder and/or whey and/whey powder dry matter.

In an illustrative embodiment of the invention, white chocolate containing molasses powder may contain milk powder in 40 % rate by weight in addition to recipe given in Table 2.

Milk chocolate containing molasses powder obtained according to recipe given in Table 2 can be classified as chocolate not containing 'refined sugar (sucrose)' or "sugar free" chocolate. When alternative products are needed, refined sugar (sucrose) of maximum 50 % by weight can be added to the above recipe.

The following table 3 shows raw materials used in bitter chocolate prescription consisting of molasses powder and rates of use.

**Table 3: Recipe for bitter chocolate consisting of molasses powder**

| **Raw material** | **Amount usable in Standard Chocolate by weight (%)** | **Amount usable in Chocolate containing molasses Powder by weight (%)** |
|---|---|---|
| **Molasses Powder** (preferably 50 % molasses dry matter and 50 % cacao powder dry matter) | 0 | 5-80 |
| **Cacao Liqueur** | 10-50 | 10-50 |
| **Cacao Fat** | 5-30 | 5-30 |
| **Emulgator** | 0,1-2 | 0,1-2 |

Molasses powder used in production of bitter chocolate consisting of molasses powder of which recipe is given in Table 3 is molasses powder obtained by mixing and drying molasses of sticky fluid phase and cacao powder and molasses powder consisting of preferably molasses dry matter in 50 % and cacao powder dry matter in 50 %.

In an illustrative embodiment of the invention, bitter chocolate containing molasses powder may contain cacao powder in 35 % rate by weight in addition to recipe given in Table 3.

Bitter chocolate containing molasses powder obtained according to recipe given in Table 3 can be classified as chocolate not containing 'refined sugar (sucrose)' or "sugar free" chocolate. When alternative products are needed, refined sugar (sucrose) of maximum 50 % by weight can be added to the above recipe.

One of the most important advantages of the chocolate, cocoline, praline and similar products disclosed under this invention is that it does not need to have crystal sugar or sweetener in its embodiment. Need for crystal sugar is considerably reduced by means of molasses powder that can be added into any food product to be sweetened and healthier and longer shelf life chocolate, cocoline, praline and similar products can be obtained. However, subject to choice, up to maximum 50% crystal sugar can be added to related mixture.

The object of the present invention is a milk chocolate, white chocolate, bitter chocolate, cocoline, praline to be offered to food sector and containing molasses powder made from molasses and milk and/or milk powder and/or whey and/or whey powder and/or cacao powder, partially or completely as sweetener, and made from cacao butter and/or cacao liqueur and/or cacao powder and/or milk powder and/or emulgator

The object of the present invention is also a method for production of a sweet food and comprising method steps described below:
**a) Mixing the molasses powder made of following raw materials; milk and/or milk powder and/or whey and/or whey powder and/or cacao powder, with cacao butter and/or cacao liquor and/or cacao powder and/or milk powder and/or emulgator until obtaining homogeneity:**
   Recipe as per type of chocolate containing molasses powder intended to be produced is selected. Raw materials in the recipe are weighed and prepared according to quantities of ingredients given therein.
   After dry raw materials of molasses powder made of molasses and milk and/or milk powder and/or whey powder and/or cacao powder, and dry substances made of cacao powder and/or milk powder in the selected recipe to be applied are subjected to a pre-mixing for 5±2 minutes at 40±5°C and then 1/3 of cacao butter in recipe and ½ of emulgator are mixed and blended and a homogenous thick cake is obtained. Lecithin, poly-glycerol poly-ricinolate esters etc. can be used as emulgator. If cacao liqueur is preferred in the recipe to be employed, it should be added during mixing.
**b) Applying refining operation to homogenous mixture until achievement of 10-50 micrometer, preferably 15-40 micrometer size particles in double cylinder firstly and then five-cylinder:**
   Homogenous mixture obtained in step above is ground and refined in double-cylinder firstly and then five-cylinder. Grinder valises cuts fibre cacao materials and milk solid agents and makes them smaller. Size of particle in mixture is taken to 10-50 µm range, preferably 15-40 µm. Particle surfaces getting smaller are wetted by cacao butter fat of said solid agents in previous step.
**c) Subjecting chocolate mixture in powder form to conching process after refining:**
   In conching which is the process after refining operation, mixture of chocolate with solid particles made really small are mixed and ground and aerated. Taste of chocolate is improved and enhanced with mixing during conching. Chocolate obtained during conching phase becomes homogenous and taste of chocolate is enriched and reaches a level melting in mouth. Also as a result of conching taste improves upon evaporation of acids, aldehydes and ketones remaining from fermentation product of cacao seeds, and aroma sharpness reduces upon progress of poly phenol oxidization. Progress of caramelization and mailard reactions to optimal level providing a special taste to product is provided in chocolate production. Another purpose of performing conching process is to reduce humidity, prevent phase separation and provide adjustment of flowing point features.
   Mixture of chocolate turning into powder form after mixing and refining stages is supplied to big heated crushing mixers called conch and 2/3 of remaining amount of cacao butter in the employed recipe is added to the mixture. Conching operation in production of chocolate containing molasses powder is conducted for a time period ranging in 4-72 hours at 45-85 °C degrees temperature subject to type and nature of chocolate containing molasses powder. Temperature is preferably selected as 65±10°C for milk chocolate containing molasses, as 50±5°C for white chocolate containing molasses powder and 65±5°C for bitter chocolate containing molasses powder. During conching process viscosity is 10000±3000 cP at 40±5°C, while particulate size is 15-40 micrometer.
   Remaining ½ of amount of emulgator of oiling nature in recipe is added at this stage and conching is continued for further 0,5-2 hours. Amount of emulgator to be added should be carefully controlled in order to avoid undesired stability changes in chocolate. Viscosity and flowing point of chocolate is adjusted by emulgator. Chocolate is made convenient for forming by adjustment of viscosity by help of emulgator. If aroma is preferred in alternative products, adding aroma agents can be made at this stage.
**d) Subjecting it to tempering process in order to prevent formation of instable crystals causing undesired fat bloom of polymeric cacao butter in chocolate:**
   Tempering is a process step required for prevention of easily melting, unstable cacao butter crystal formation and providing stable "core crystals" formation. Chocolate is tempered in a proper manner and carefully in order to prevent formation of instable crystals causing undesired fat bloom of polymeric cacao butter in chocolate, Formation of mat grey surface called "fat bloom" occurs as a result of bad or uncontrolled tempering.
   Chocolate mixture standardized in preceding method step is cooled from 45-85°C to 27-29°C in controlled way and then heated to 30-32°C in controlled way again.
   Cooling and heating process are both required to be performed together with a constant mixing. Thus unstable β crystals melt and β stable crystals to direct crystallization in next cooling stage will only remain in thick chocolate solution.
**e) Filling tempered chocolate/covering in forms:**
   Chocolate completing crystal formation in previous method step is firstly filled in forms of desired size and shapes or poured onto other product for covering.
**f) Cooling chocolate filled in/covered in forms:**
   Chocolate filled in forms or poured onto other product for covering is cooled ain cooling tunnels of 10-18°C degrees for 10-60 minutes. Chocolate cooling and hardening is packaged in preferred package method and stored.

Packaging is made by use of paper, aluminium, plastic base materials or combination thereof in nature protecting nature of chocolate, cocoline, praline and similar product and not harmful for health. After packing tablet or covered products, they are stored in places of 14-22°C temperature without odour with humidity adjusted.

When any food sweetened with molasses powder is consumed, food equivalent to sugar in terms of energy but much healthier products are consumed. The most important advantage provided by the invention is that healthier and better nutrition products sweetened by molasses powder are obtained.

The chocolate containing molasses powder and produced in this line as disclosed under the invention has superior qualities than all of chocolate, present chocolate and diabetic/diet chocolates given as samples for one of cocoline, praline and similar products. Thus chocolate consumed by any individuals of all ages in society becomes much healthier.

With use of molasses powder instead of refined sugar in chocolate, cocoline and similar products, foods with lower humidity can be obtained and thus longer shelf life is provided and storing becomes much easier. In addition, consumers believing that products are more natural and healthier with use of natural products are offered healthier and more nutrient chocolate, cocoline, praline or similar products sweetened with molasses powder.

## Claims

1. A milk chocolate comprising;
- 5-60 % by weight of molasses powder obtained by drying a mixture comprising molasses and or more of milk, milk powder, whey, whey powder or cacao powder,
- 5-25 % by weight of cacao liquor,
- 15-40 % by weight of cacao butter,
- 0,1-2 % by weight of emulgator,
- wherein the molasses powder is used as a sweetening agent partially or completely instead of refined sugar.

2. The milk chocolate according to claim 1, **characterized in that** it further comprises up to %35 by weight of cacao powder.

3. The milk chocolate according to claim 1 or 2, **characterized in that** it further comprises up to %35 by weight of milk powder.

4. A white chocolate comprising:
- 5-70% by weight of molasses powder obtained by drying a mixture comprising molasses and one or more of milk, milk powder, whey or whey powder,
- 15-40% by weight of cacao butter,
- 0,1-2% by weight of emulgator,
- wherein the molasses powder is used as a sweetening agent partially or completely instead of refined sugar.

5. The white chocolate according to claim 4, **characterized in that** it futher comprises up to 40% by weight of milk powder.

6. A bitter chocolate comprising:
- 5-80% by weight of molassses powder obtained by drying a mixture comprising molasses and cacao powder,
- 10-50% by weight of cacao liquor,
- 5-30% by weight of cacao butter,
- 0,1-2% by weight of emulgator,
- wherein the molasses powder is used as a sweetening agent partially or completely instead of refined sugar.

7. The bitter chocolate according to claim 6, **characterized in that** it futher comprises up to 35% by weight of cacao powder.

8. The sweet food product selected from milk chocolate, white chocolate or bitter chocolate according to any of claims 1 to 7, wherein the emulgator is selected from lecithin or polyglycerol or polyricinoleate.

9. A method for production of a sweet food product according to any one of claims 1 to 8, **characterized in** comprising steps of:
a) mixing molasses powder with one or more of cacao butter, cacao liquor, cacao powder, milk powder and emulgator until a homogeneous mixture is obtained,
b) refining the mixture in a double-cylinder and then a five-cylinder roller until a particle size 10-50 micrometer, preferably 15-40 micrometer is achieved,
c) subjecting the refined mixture to a conching process,
d) tempering the chocolate mixture to avoid formation of unstable crystals of cacao butter,
e) filling or coating with tempered chocolate,
f) cooling the product.

10. The method according to claim 9, wherein step (a) comprises;
- premixing the dry raw materials including molasses powder at 40±5°C for 5±2 minutes,
- subsequently mixing with one third of the cacao butter, half of the emulgator, and optionally all of the cacao liquor until a thich homogeneous paste is obtained.

11. The method according to claim 9, wherein step (c) comprises;
- adding the remaining two-thirds of cacao butter to the refined mixture,
- conching the mixture for 4-72 hours at 45-85°C to reach a viscosity of 10.000±3.000 cP at 40±5°C and a particle size of 15-40 µm,
- adding the remaining half of the emulgator and continuing the conching for a further 0,5-2 hours.

12. The method according to claim 9, wherein in step d), the chocolate mixture is cooled to 27-29°C and reheated to 30-32°C for tempering.

13. The method according to claim 9, wherein in step f), the chocolate is cooled at 10-18°C in cooling tunnels for 10-60 minutes.

14. The method according to any one of claims 9 to 13, wherein the molasses powder is used to replace at least 50% of the total refined sugar content.

15. The method according to any one of claims 9 to 14, wherein the chocolate is in the form of cocoline, praline or tablet chocolate.

## Patentansprüche

1. Milchschokolade, umfassend:
- 5-60 Gew.-% Melassepulver, das durch Trocknen einer Mischung aus Melasse und einem oder mehreren von Milch, Milchpulver, Molke, Molkenpulver oder Kakaopulver,
- 5-25 Gew.-% Kakaomasse,
- 15-40 Gew.-% Kakaobutter,
- 0,1-2 Gew.-% Emulgator,
- wobei das Melassepulver teilweise oder vollständig anstelle von raffiniertem Zucker als Süßungsmittel verwendet wird.

2. Milchschokolade gemäß Anspruch 1, **dadurch gekennzeichnet, dass** sie zusätzlich bis zu 35 Gew.-% Kakaopulver enthält.

3. Milchschokolade gemäß Anspruch 1 oder 2, **dadurch gekennzeichnet, dass** sie zusätzlich bis zu 35 Gew.-% Milchpulver enthält.

4. Weiße Schokolade, umfassend:
- 5-70 Gew.-% Melassepulver, das durch Trocknen einer Mischung aus Melasse und einem oder mehreren von Milch, Milchpulver, Molke oder Molkenpulver,
- 15-40 Gew.-% Kakaobutter,
- 0,1-2 Gew.-% Emulgator,
- wobei das Melassepulver teilweise oder vollständig anstelle von raffiniertem Zucker als Süßungsmittel verwendet wird.

5. Weiße Schokolade gemäß Anspruch 4, **dadurch gekennzeichnet, dass** sie zusätzlich bis zu 40 Gew.-% Milchpulver enthält.

6. Bitterschokolade, umfassend:
- 5-80 Gew.-% Melassepulver, das durch Trocknen einer Mischung aus Melasse und Kakaopulver gewonnen wird,
- 10-50 Gew.-% Kakaomasse,
- 5-30 Gew.-% Kakaobutter,
- 0,1-2 Gew.-% Emulgator,
- wobei das Melassepulver teilweise oder vollständig anstelle von raffiniertem Zucker als Süßungsmittel verwendet wird.

7. Bitterschokolade gemäß Anspruch 6, **dadurch gekennzeichnet, dass** sie zusätzlich bis zu 35 Gew.-% Kakaopulver enthält.

8. Süßwarenprodukt, ausgewählt aus Milchschokolade, weißer Schokolade oder Bitterschokolade gemäß einem der Ansprüche 1 bis 7, wobei der Emulgator ausgewählt ist aus Lecithin oder Polyglycerin oder Polyricinoleat.

9. Verfahren zur Herstellung eines Süßwarenprodukts gemäß einem der Ansprüche 1 bis 8, **gekennzeichnet durch** die folgenden Schritte:
a) Mischen von Melassepulver mit einem oder mehreren der folgenden Bestandteile: Kakaobutter, Kakaomasse, Kakaopulver, Milchpulver und Emulgator, bis eine homogene Mischung erhalten wird,
b) Verfeinern der Mischung in einer Doppelzylinder- und anschließend einer Fünfzylinderwalze, bis eine Partikelgröße von 10-50 Mikrometern, vorzugsweise 15-40 Mikrometern, erreicht ist,
c) Unterziehen der verfeinerten Mischung einem Conchierprozess,
d) Temperieren der Schokoladenmischung, um die Bildung instabiler Kakaobutterkristalle zu vermeiden,
e) Füllen oder Überziehen mit temperierter Schokolade,
f) Kühlen des Produkts.

10. Verfahren nach Anspruch 9, wobei Schritt (a) umfasst:
- Vormischen der trockenen Rohstoffe einschließlich Melassepulver bei 40±5°C für 5±2 Minuten,
- anschließendes Mischen mit einem Drittel der Kakaobutter, der Hälfte des Emulgators und optional der gesamten Kakaomasse, bis eine dicke homogene Paste erhalten wird.

11. Verfahren nach Anspruch 9, wobei Schritt (c) umfasst:
- Hinzufügen der restlichen zwei Drittel der Kakaobutter zu der raffinierten Mischung,
- Conchieren der Mischung für 4-72 Stunden bei 45-85°C, um eine Viskosität von 10.000±3.000 cP bei 40±5°C und eine Partikelgröße von 15-40 µm zu erreichen,
- Hinzufügen der verbleibenden Hälfte des Emulgators und Fortsetzen des Conchierens für weitere 0,5-2 Stunden.

12. Verfahren nach Anspruch 9, wobei in Schritt d) die Schokoladenmischung auf 27-29°C abgekühlt und zum Temperieren wieder auf 30-32°C erhitzt wird.

13. Verfahren nach Anspruch 9, wobei in Schritt f) die Schokolade in Kühltunneln 10-60 Minuten lang auf 10-18°C abgekühlt wird.

14. Verfahren nach einem der Ansprüche 9 bis 13, wobei das Melassepulver verwendet wird, um mindestens 50% des gesamten raffinierten Zuckergehalts zu ersetzen.

15. Verfahren nach einem der Ansprüche 9 bis 14, wobei die Schokolade in Form von Cocoline, Praline oder Tafelschokolade vorliegt.

## Revendications

1. Un chocolat au lait comprenant:
- 5-60 % en poids de mélasse en poudre obtenue par séchage d'un mélange comprenant des mélasses et un ou plusieurs de lait, lait en poudre, lactosérum, lactosérum en poudre ou cacao en poudre,
- 5-25 % en poids de liqueur de cacao,
- 15-40 % en poids de beurre de cacao,
- 0,1-2 % en poids d'émulsifiant,
- dans lequel la mélasse en poudre est utilisée comme édulcorant partiellement ou totalement à la place du sucre raffiné.

2. Le chocolat au lait selon la revendication 1, **caractérisé en ce qu'**il comprend en outre jusqu'à 35 % en poids de cacao en poudre.

3. Le chocolat au lait selon la revendication 1 ou 2, **caractérisé en ce qu'**il comprend en outre jusqu'à 35 % en poids de lait en poudre.

4. Un chocolat blanc comprenant:
- 5-70 % en poids de mélasse en poudre obtenue par séchage d'un mélange comprenant de la mélasse et un ou plusieurs de lait, lait en poudre, lactosérum ou lactosérum en poudre,
- 15-40 % en poids de beurre de cacao,
- 0,1-2 % en poids d'émulsifiant,
- dans lequel la mélasse en poudre est utilisée comme édulcorant partiellement ou totalement à la place du sucre raffiné.

5. Le chocolat blanc selon la revendication 4, **caractérisé en ce qu'**il comprend en outre jusqu'à 40 % en poids de lait en poudre.

6. Un chocolat noir comprenant:
- 5-80 % en poids de mélasse en poudre obtenue par séchage d'un mélange comprenant des mélasses et de cacao en poudre,
- 10-50 % en poids de liqueur de cacao,
- 5-30 % en poids de beurre de cacao,
- 0,1-2 % en poids d'émulsifiant,
- dans lequel la mélasse en poudre est utilisée comme édulcorant partiellement ou totalement à la place du sucre raffiné.

7. Le chocolat noir selon la revendication 6, **caractérisé en ce qu'**il comprend en outre jusqu'à 35 % en poids de cacao en poudre.

8. Le produit alimentaire sucré choisi parmi le chocolat au lait, le chocolat blanc ou le chocolat noir selon l'une quelconque des revendications 1 à 7, dans lequel l'émulsifiant est choisi parmi la lécithine ou le polyglycérol ou le polyricinoléate.

9. Une méthode pour la production d'un produit alimentaire sucré selon l'une quelconque des revendications 1 à 8, **caractérisée en ce qu'**elle comprend les étapes suivantes:
a) mélanger la mélasse en poudre avec un ou plusieurs de beurre de cacao, liqueur de cacao, cacao en poudre, lait en poudre et émulsifiant jusqu'à obtenir un mélange homogène,
b) raffiner le mélange dans un cylindre double et ensuite dans un cylindre à cinq rouleaux jusqu'à obtenir une taille de particules comprise entre 10-50 micromètres, de préférence entre 15-40 micromètres,
c) soumettre le mélange raffiné à un processus de conchage,
d) tempérer le mélange de chocolat pour éviter la formation de cristaux instables de beurre de cacao,
e) remplir ou enrober de chocolat tempéré,
f) refroidir le produit.

10. La méthode selon la revendication 9, dans laquelle l'étape (a) comprend;
- prémélanger les matières premières sèches, y compris la mélasse en poudre, à 40±5 °C pendant 5±2 minutes,
- puis mélanger avec un tiers du beurre de cacao, la moitié de l'émulsifiant et, éventuellement, toute la liqueur de cacao jusqu'à obtenir une pâte épaisse et homogène.

11. La méthode selon la revendication 9, dans laquelle l'étape (c) comprend;
- ajouter les deux tiers restants de beurre de cacao au mélange raffiné,
- conchage du mélange pendant 4-72 heures à 45-85 °C pour atteindre une viscosité de 10.000±3.000 cP à 40±5 °C et une taille de particules de 15-40 µm,
- ajouter la moitié restante de l'émulsifiant et poursuivre le conchage pendant 0,5-2 heures supplémentaires.

12. La méthode selon la revendication 9, dans laquelle, à l'étape d), le mélange de chocolat est refroidi à 27-29 °C et réchauffé à 30-32 °C pour le tempérage.

13. La méthode selon la revendication 9, dans laquelle, à l'étape f), le chocolat est refroidi à 10-18 °C dans des tunnels de refroidissement pendant 10-60 minutes.

14. La méthode selon l'une quelconque des revendications 9 à 13, dans laquelle la mélasse en poudre est utilisée pour remplacer au moins 50 % de la teneur totale en sucre raffiné.

15. La méthode selon l'une quelconque des revendications 9 à 14, dans laquelle le chocolat se présente sous la forme de cocoline, de praline ou de tablette de chocolat.
